Europäisches Patentamt

European Patent Office

Office européen des brevets

(11) Veröffentlichungsnummer: **0 420 014 A2**

# EUROPÄISCHE PATENTANMELDUNG

(21) Anmeldenummer: 90117955.6

(22) Anmeldetag: 18.09.90

(51) Int. Cl.5: **B62J 11/00**

(30) Priorität: 29.09.89 DE 3932668

(43) Veröffentlichungstag der Anmeldung:
03.04.91 Patentblatt 91/14

(84) Benannte Vertragsstaaten:
AT BE CH DE FR IT LI LU NL

(71) Anmelder: LOOK S.A.
Rue de la Pique B.P. 72
F-58004 Nevers Cédex(FR)

(72) Erfinder: Mercat, Jean-Pierre
24 Rue Gambetta
F-37110 Château Renault(FR)

(74) Vertreter: Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)

(54) Vorrichtung zur kraftschlüssigen Fixierung eines Gegenstandes an rohr- oder stabförmigen Elementen.

(57) Bei einer Vorrichtung zur kraftschlüssigen Fixierung eines Gegenstandes an rohr- oder stabförmigen Elementen, insbesondere eines Anzeige- und/oder Signalgabegerätes am Lenker eines Fahrrades, ist ein Halteorgan vorgesehen, welches aus zumindest einem flexiblen Band oder Kabel besteht. Dieses flexible Band oder Kabel umschlingt das Element teilweise und ist mit beiden Enden mittels einer Spannschraubverbindung am zu fixierenden Gegenstand festspannbar. Mit Hilfe einer derartigen Vorrichtung ist die Befestigung des Gegenstandes auch bei verschiedenen Außenkonturen des rohr- oder stabförmigen Elementes problemlos und auf einfache Weise möglich.

Fig. 1

EP 0 420 014 A2

## VORRICHTUNG ZUR KRAFTSCHLÜSSIGEN FIXIERUNG EINES GEGENSTANDES AN ROHR- ODER STAB-FÖRMIGEN ELEMENTEN

Die Erfindung betrifft eine Vorrichtung zur kraftschlüssigen Fixierung eines Gegenständes an rohr- oder stabförmigen Elementen, insbesondere eines Anzeige- und/oder Signalgabegerätes am Lenker eines Fahrrades, mittels eines Halteorgans.

Es ist bekannt, Gegenstände an rohr- oder stabförmigen Elementen dadurch zu befestigen, daß der Gegenstand von einer Seite her an das Element angelegt und von der gegenüberliegenden Seite des Elementes her mittels eines blockförmigen Halteorgans verschraubt wird, welches einen die Außenkontur des rohr- oder stabförmigen Elementes angepaßten Auflagebereich aufweist. Das Halteorgan ist dabei von einer solchen Steifigkeit, daß es durch das Verschrauben nicht nennenswert verformt wird. Weiterhin sind rohrschellenförmige Halteorgane bekannt, welche das rohr- oder stabförmige Element teilweise umschließen und ebenfalls von der gegenüberliegenden Seite des Elementes her mit dem zu fixierenden Gegenstand verschraubt werden.

Diese bekannten Halteorgane weisen den Nachteil auf, daß sie einen relativ breiten, ebenen Auflagebereich auf dem rohr-oder stabförmigen Element benötigen und vorstehende, der Verschraubung dienende Endbereiche aufweisen, welche einen entsprechenden Einbauraum erfordern und eine Gefahrenquelle für Verletzungen darstellen. Ferner sind diese bekannten Halteorgane nur für eine bestimmte Querschnittsform bzw. Außenkontur der rohr- oder stabförmigen Elemente geeignet, so daß für verschiedene Querschnittsformen verschiedene Halteorgane bereitgestellt werden müssen.

Aufgrund dieser Eigenschaften der bekannten Halteorgane wurden bisher insbesondere Anzeige- und/oder Signalgabegeräte, beispielsweise Wattmeter für Fahrräder, nicht zentral in der Mitte des Fahrradlenkers, sondern in daran angrenzenden Seitenbereichen befestigt. Dies ist jedoch insbesondere bei Rennlenkern problematisch, da bei diesen Lenkern die an das Mittelteil angrenzenden Seitenbereiche als Griffbereich für die Hände dienen, falls der Fahrer in etwas aufrechterer Haltung fahren möchte.

Der Erfindung liegt die Aufgabe zugrunde, eine Vorrichtung nach dem Oberbegriff des Anspruchs 1 zu schaffen, mit der der Gegenstand auf besonders einfache und kostengünstige Weise und weitgehend unabhängig von der Außenkontur des rohr- oder stabförmigen Elementes an diesem befestigt werden kann.

Diese Aufgabe wird erfindungsgemäß dadurch gelöst, daß das Halteorgan aus zumindest einem flexiblen Band oder Kabel besteht, welches das Element teilweise umschlingt und mit beiden Enden mittels einer Spannschraubverbindung am zu fixierenden Gegenstand festspannbar ist.

Die Vorteile der Erfindung liegen insbesondere darin, daß sich das Band oder Kabel aufgrund seiner Flexibilität jeder Außenkontur des rohr- oder stabförmigen Elementes anpassen kann und dadurch bei verschiedensten Außenkonturen bzw. Querschnittsformen von rohr- oder stabförmigen elementen verwendet werden kann. Weiterhin ist ein derartiges Band kostengünstig herzustellen, aufgrund seiner Flexibilität und der Spannschraubverbindung einfach montierbar, benötigt nur wenig Einbauraum und weist nur ein geringes Gewicht auf.

Eine besonders einfache und sichere Halterung wird dadurch erreicht, daß das flexible Band oder Kabel zwei Abschnitte aufweist, welche im fixierten Zustand des Gegenstandes parallel oder in einem spitzen Winkel zueinander das rohr-oder stabförmige Element teilweise umschlingen, während ein zwischen diesen Abschnitten liegender mittlerer Bereich des Bandes oder Kabels und nach der Umschlingung auch die beiden Enden am Gegenstand gehaltert sind.

Gemäß einer vorteilhaften Ausführungsform der Erfindung besteht die Spannschraubverbindung aus an beiden Enden des flexiblen Bandes oder Kabels befestigten Gewindestiften und aus am Gegenstand abgestützten Spannmuttern oder Schraubelementen, in die die Gewindestifte einschraubbar sind.

Vorteilhafterweise weist der zu fixierende Gegenstand einen parallel zur Längsachse des rohr- oder stabförmigen Elementes verlaufenden Auflagebereich für den mittleren Bereich des flexiblen Bandes auf. In diesem Auflagebereich kann eine Längsnut zur Aufnahme des mittleren Bereiches des Bandes oder Kabels vorgesehen sein, deren Enden mit vorzugsweise senkrecht zur Längsnut angeordneten ersten Durchgangsöffnungen in Verbindung stehen, durch die die beiden Enden des flexiblen Bandes oder Kabels vor der Umschlingung des rohr-oder stabförmigen Elementes hindurchführbar sind. Der zu fixierende Gegenstand weist ferner zwei weitere, von den ersten Durchgangsöffnungen beabstandete zweite Durchgangsöffnungen auf, durch die die beiden Enden des flexiblen Bandes oder Kabels nach der Umschlingung des rohr- oder stabförmigen Elementes in umgekehrter Richtung hindurchführbar sind.

Aufgrund dieser Anordnung werden die am rohr- oder stabförmigen Element anliegenden Abschnitte des flexiblen Bandes oder Kabels in einem Abstand voneinander gehalten, der dem Abstand zwischen den beiden ersten Durchgangsöffnungen bzw. dem Abstand zwischen den beiden zweiten Durchgangsöffnungen entspricht. Die Längsnut im parallel zur Längsachse des rohr- oder stabförmigen Elementes verlaufenden Auflagebereich dient dabei der sicheren Führung des mittleren Bereichs des flexiblen Bandes oder Kabels.

Gemäß einer vorteilhaften Ausführungsform weisen die zweiten Durchgangsöffnungen des zu fixierenden Gegenstandes Senkbohrungen oder Vertiefungen zur versenkten Aufnahme der Spannmuttern oder Schraubelemente auf. Auf diese Weise wird vermieden, daß im Bereich der Spannschraubverbindungen Teile vorstehen, welche zu Verletzungen führen könnten. Es ist ferner zu beachten, daß durch diese Anordnung in dem Falle, daß auch der mittlere Bereich des flexiblen Bandes oder Kabels innerhalb der Längsnut versenkt angeordnet ist, keinerlei Teile des flexiblen Bandes oder Kabels oder der Spannverbindung über die dem rohr- oder stabförmigen Element abgewandte Oberfläche des zu fixierenden Gegenstandes vorsteht, wodurch neben einer Verringerung der Verletzungs- und Beschädigungsgefahr auch ein besonders formschönes Aussehen der Vorrichtung erreicht werden kann.

Der zu fixierende Gegenstand kann einteilig oder aus mehreren Komponenten zusammengesetzt sein. Insbesondere ist es möglich, daß der zu fixierende Gegenstand aus einem am rohr-oder stabförmigen Element festspannbaren Sockel besteht, mit dem die übrigen Teile des Gegenstandes, insbesondere die Anzeige- und Signalgabeteile, mittels einer Schiebeführung, insbesondere mittels einer T- oder Schwalbenschwanzführung, oder einem Drehverschluß lösbar verbunden sind. Eine derartige Ausführung ermöglicht es, daß der Sokkel am rohr- oder stabförmigen Element verbleibt, während andere Teile ohne Lösen des Sockels abgenommen werden können, um diese beispielsweise vor Diebstahl oder Beschädigung zu schützen.

Ferner ist es auf diese Weise möglich, denselben Sockel zur Befestigung verschiedener Teile oder Geräte zu verwenden.

Gemäß einer speziellen Ausführungsform besteht der zu fixierende Gegenstand aus einem Wattmeter zur Anbringung an Fahrradlenkern. In diesem Falle führt die erfindungsgemäße Vorrichtung dazu, daß das Wattmeter nicht in den Seitenbereichen des Lenkers angebracht werden muß, sondern am Mittelteil des Lenkers angeordnet werden kann, so daß die Seitenbereiche als Handgriffflächen freigehalten werden.

Weitere Ausführungsformen und Ausbildungsvarianten der Erfindung sind aus den Unteransprüchen ersichtlich.

Die Erfindung wird nachfolgend anhand der Zeichnung beispielsweise näher erläutert; in dieser zeigen:

Figur 1 einen Vertikalschnitt durch einen Sockel eines Wattmeters, welcher mittels eines erfindungsgemäßen Halteorgans auf einem Fahrradlenker festgespannt ist, nach Linie I-I von Figur 2,

Figur 2 eine Draufsicht auf die erfindungsgemäße Haltevorrichtung und

Figur 3 einen Halbschnitt entlang der Linie III-III von Figur 1.

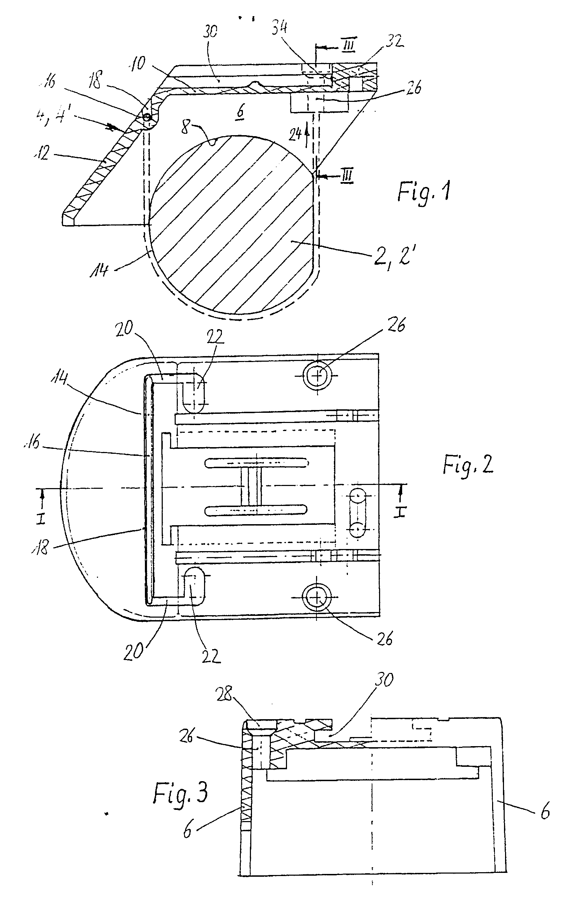

Aus Figur 1 ist ein rohr- oder stabförmiges Element 2 in der Form eines Fahrradlenkers 2' ersichtlich, auf dem ein Gegenstand 4 in Form eines Sockels 4' über einen Teil des Umfangs aufliegt. An dem Sockel 4, kann mittels einer später näher beschriebenen Schiebeführung ein Wattmeter zur Anzeige von Leistungsdaten des Radfahrers, ein Tachometer, eine Leuchte oder dergleichen befestigt werden.

Der Sockel 4' weist zwei parallele Seitenwande 6 auf, welche mit kreisbogenförmigen, an die Außenkontur des Lenkers 2' angepaßten Auflagebereichen 8 auf dem Lenker 2' aufliegen und sich von diesem senkrecht oder in einem bestimmten Winkel zueinander nach außen erstrecken. Die Seitenwande 6 sind nach oben hin durch eine horizontale Kupplungswand 10 und nach vorne durch eine Vorderwand 12 verbunden, welche an die Kupplungswand 10 anschließt und in einem stumpfen Winkel zu dieser verläuft. Die Seitenwande 6 sind voneinander und die Kupplungswand 10 und Vorderwand 12 vom Lenker 2' derart beabstandet, daß innerhalb dieser Wände ein Hohlraum entsteht, der zur Aufnahme von verdickten Bereichen des Lenkers geeignet ist.

Der Sockel 4' ist mittels eines in Figur 1 gestrichelt dargestellten, flexiblen Seils oder Kabels 14 am Lenker 2' festgespannt, und zwar derart, daß die Auflagebereiche 8 der Seitenwände 6 fest gegen den Lenker 2' gezogen werden. Wie aus Figur 2 ersichtlich ist, verläuft ein mittlerer Bereich 16 des Kabels 14 in einer Längsnut 18, welche parallel zur Längsachse des Lenkers 2' in der Vorderwand 12 angeordnet ist. Die Längsnut 18 ist nach oben hin offen und erstreckt sich über einen wesentlichen Teil der Breite des Sockels 4'. Die Tiefe der Längsnut 18 ist so bemessen, daß der mittlere Bereich 16 des Kabels 14 vollständig in der Längsnut 18 versenkt ist und deshalb nicht über die Oberfläche der Vorderwand 12 hinausragt.

Die Enden der Längsnut 18 stehen mit schlitzförmigen, parallel zu den Seitenwänden verlaufenden, ersten Durchgangsöffnungen 20 in Verbindung. Diese Durchgangsöffnungen 20 erstrecken sich von den Enden der Längsnut 18 bis hin zu erweiterten Durchlässen 22, welche in der Nähe des Übergangsbereiches zwischen der Kupplungswand 10 und der Vorderwand 12 in der Kupplungswand 10 vorgesehen sind und dem erleichterten Einführen der Enden des Kabels 14 dienen.

Zum Befestigen des Sockels 4' auf dem Lenker 2' werden die beiden Enden des Kabels 14 durch die erweiterten Durchlässe 22 von oben nach unten eingeführt und so weit gespannt, bis der mittlere Bereich 16 des Kabels 14 gestreckt in der Längsnut 18 liegt. Hierbei werden die beiden Enden des Kabels 14 senkrecht nach unten gezogen, wobei sich die an dem mittleren Bereich 16 unmittelbar anschließenden Abschnitte des Kabels 14 längs der schlitzförmigen ersten Durchgangsöffnungen 20 in Richtung auf die Enden der Längsnut 18 bewegen. Anschließend werden die beiden Enden des Kabels 14 um die noch freie Seite des Lenkers 2' herumgeführt und in Richtung des Pfeils 24 in zweite Durchgangsöffnungen 26 eingeführt, welche in der Kupplungswand 10 vorgesehen sind. Der Abstand der zweiten Durchgangsöffnungen 26 von den Enden der Längsnut 18 entspricht in etwa dem Durchmesser des Lenkers 2', so daß die in dem Hohlraum befindlichen, freien Abschnitte des Kabels 14 parallel zueinander verlaufen.

Um das Kabel 14 spannen zu können, sind an den Enden des Kabels 14 nicht dargestellte Gewindestifte vorgesehen, welche in ebenfalls nicht dargestellte, in den zweiten Durchgangsöffnungen 26 angeordnete und abgestützte Spannmuttern oder Schraubelemente eindrehbar sind.

Derartige Schraubelemente können beispielsweise die Form einer Senk- oder Inbusschraube haben, welche statt einem Außen- ein Innengewinde aufweisen. Die Länge des Schraubelementes, des Innengewindes und der an den Enden des Kabels 14 befestigten Gewindestifte kann dabei so bemessen werden, daß auch bei unterschiedlichen Lenkerdurchmessern ein ausreichender Spannweg zur Verfügung steht.

Die zweiten Durchgangsöffnungen 26 weisen einen erweiterten Kopfbereich bzw. eine Senkbohrung oder Vertiefung 28 auf (Figur 3), so daß entsprechend geformte Schraubelemente versenkt in der Kupplungswand 10 angeordnet werden können.

Ferner sind die zweiten Durchgangsöffnungen 26 ebenfalls wie die ersten Durchgangsöffnungen 20 in der Nähe der Seitenwände 6 vorgesehen, so daß aufgrund der hohen Steifigkeit in diesem Randbereich die Verformungen des Sockels 4' beim Spannen des Kabels 14 gering gehalten werden können. Außerdem wird auf diese Weise erreicht, daß die beiden am Lenker 2' anliegenden Abschnitte des Kabels 14 relativ weit voneinander beabstandet sind, so daß sich eine hohe Kippsicherheit des Sockels ergibt.

Die Kupplungswand 10 weist quer zur Längsachse des Lenkers eine im Querschnitt umgekehrt T-förmige Schiebeführung auf, welche zur Vorderwand 12 hin geöffnet ist. Zur Rückseite hin ist die Schiebeführung 30 durch einen Quersteg 32 mit einer Schulter 34 begrenzt, die als Endanschlag dient, wenn ein zur Schiebeführung 30 komplementäres Führungsteil des anzubringenden Gerätes von der Vorderwand 12 her in die Schiebeführung 30 eingeführt wird.

Während im vorliegenden Beispiel die Befestigung eines Sokkels auf einem Fahrradlenker mittels eines einzigen Kabels erläutert wurde, ist es ebenfalls möglich, mehrere Kabel nebeneinander vorzusehen, welche in der gleichen Weise wie im erläuterten Beispiel angeordnet und befestigt sind. Weiterhin ist es möglich, die ersten Durchgangsöffnungen 20 in der gleichen Weise wie die zweiten Durchgangsöffnungen 26 auszubilden und auch in den ersten Durchgangsöffnungen 20 Spannmuttern oder Schraubelemente vorzusehen. In diesem Falle würden die beiden Enden des Kabels 14 nicht auf der gleichen Seite, sondern auf verschiedenen Seiten des Lenkers 2' gehalten und mittels der Spannmuttern oder Schraubelemente festspannbar sein.

Weitere Anwendungsmöglichkeiten der erfindungsgemäßen Haltevorrichtung ergeben sich insbesondere auch dann, wenn irgendwelche Gegenstände, beispielsweise Flaschenhalter am Fahrradrahmen befestigt werden sollen.

## Ansprüche

1. Vorrichtung zur kraftschlüssigen Fixierung eines Gegenstandes an rohr- oder stabförmigen Elementen, insbesondere eines Anzeige- und/oder Signalgabegerätes am Lenker eines Fahrrades, mittels eines Halteorgans,
dadurch **gekennzeichnet,**
daß das Halteorgan aus zumindest einem flexiblen Band oder Kabel (14) besteht, welches das Element (2) teilweise umschlingt und mit beiden Enden mittels einer Spannschraubverbindung am zu fixierenden Gegenstand (4) festspannbar ist.

2. Vorrichtung nach Anspruch 1,
dadurch **gekennzeichnet,**
daß das flexible Band oder Kabel (14) zwei Abschnitte aufweist, welche im fixierten Zustand des Gegenstandes (4) parallel oder in einem spitzen Winkel zueinander das rohr-oder stabförmige Element (2) teilweise umschlingen, während ein zwischen diesen Abschnitten liegender mittlerer Bereich (16) des Bandes oder Kabels (14) und nach der Umschlingung auch die beiden Enden am Gegenstand (4) gehalten sind.

3. Vorrichtung nach Anspruch 1 oder 2,
dadurch **gekennzeichnet,**
daß die Spannschraubverbindung aus an beiden Enden des flexiblen Bandes oder Kabels (14) befestigten Gewindestiften und aus am Gegenstand (4) abgestützten Spannmuttern oder Schraubelementen besteht, in die die Gewindestifte einschraubbar sind.

4. Vorrichtung nach Anspruch 2 oder 3,
dadurch **gekennzeichnet,**
daß der zu fixierende Gegenstand (4) einen parallel zur Längsachse des rohr- oder stabförmigen Elementes (2) verlaufenden Auflagebereich für den mittleren Bereich (16) des flexiblen Bandes oder Kabels (14) aufweist, in dem eine Längsnut (18) zur Aufnahme des mittleren Bereiches (16) vorgesehen ist, deren Enden mit vorzugsweise senkrecht zur Längsnut (18) angeordneten ersten Durchgangsöffnungen (20) in Verbindung stehen, durch die die beiden Enden des flexiblen Bandes oder Kabels (14) vor der Umschlingung des rohr- oder stabförmigen Elementes (2) hindurchführbar sind, und daß der zu fixierende Gegenstand (4) zwei weitere, von den ersten Durchgangsöffnungen (20) beabstandete zweite Durchgangsöffnungen (26) aufweist, durch die die beiden Enden des flexiblen Bandes oder Kabels (14) nach der Umschlingung des rohr- oder stabförmigen Elementes (2) in umgekehrter Richtung hindurchführbar sind.

5. Vorrichtung nach Anspruch 3 oder 4,
dadurch **gekennzeichnet,**
daß die zweiten Durchgangsöffnungen (26) des zu fixierenden Gegenstandes (4) Senkbohrungen oder Vertiefungen (28) zur versenkten Aufnahme der Spannmuttern oder Schraubelemente aufweisen.

6. Vorrichtung nach einem der vorhergehenden Ansprüche,
dadurch **gekennzeichnet,**
daß der zu fixierende Gegenstand (4) aus einem am rohr- oder stabförmigen Element (2) festspannbaren Sockel (4') besteht, mit dem die übrigen Teile des Gegenstandes (4), insbesondere die Anzeige- und Signalgabeteile, mittels einer Schiebeführung (30), insbesondere mittels einer T- oder Schwalbenschwanzführung, oder einem Drehverschluß lösbar verbunden sind.

7. Vorrichtung nach einem der vorhergehenden Ansprüche,
dadurch **gekennzeichnet,**
daß das flexible Band oder Kabel (14) aus einem Draht- oder Kunststoffseil besteht.

8. Vorrichtung nach einem der vorhergehenden Ansprüche,
dadurch **gekennzeichnet,**
daß das flexible Band oder Kabel (14) mit einer vorzugsweise aus Kunststoff bestehenden Ummantelung versehen ist.

9. Vorrichtung nach einem der Ansprüche 6 bis 8,
dadurch **gekennzeichnet,**
daß der Sockel (4') aus Kunststoff besteht.

10. Vorrichtung nach einem der Ansprüche 6 bis 9,
dadurch **gekennzeichnet,**
daß der Sockel (4') einen an die Außenkontur des rohr- oder stabförmigen Elementes (2) angepaßten Auflagebereich (8) aufweist.

11. Vorrichtung nach einem der vorhergehenden Ansprüche,
dadurch **gekennzeichnet,**
daß der zu fixierende Gegenstand (4) aus einem Wattmeter zur Anbringung an Fahrradlenkern (2') besteht.

Fig. 1

Fig. 2

Fig. 3